# EUROPÄISCHE PATENTSCHRIFT

(11) **EP 1 079 127 B1**
(45) Veröffentlichungstag und Bekanntmachung des Hinweises auf die Patenterteilung: **15.02.2006**
(21) Anmeldenummer: 00117125.5
(22) Anmeldetag: 10.08.2000
(51) Int. Cl.: F16D 3/18, F16D 11/14

(54) **Zahnkupplung für kettengetriebene Fahrzeuge**
Toothed coupling for tracked vehicles
Accouplement denté pour véhicules à chenilles

(30) Priorität: 27.08.1999 DE 19940661
(43) Veröffentlichungstag der Anmeldung: 28.02.2001
(73) Patentinhaber: Renk Aktiengesellschaft, 86159 Augsburg (DE)
(72) Erfinder: Peter, Berthold, 86368 Gersthofen (DE); Proske, Günter, 86169 Augsburg (DE)
(74) Vertreter: Schober, Stefan

(56) Entgegenhaltungen:
- FR-A- 2 539 830
- GB-A- 1 146 591
- GB-A- 2 241 766

## Beschreibung

Die Erfindung betrifft eine Zahnkupplung für kettengetriebene Fahrzeuge, gemäß dem Oberbegriff des Patentanspruchs 1, und ein Werkzeug für eine Zahnkupplung gemäß dem Oberbegriff des Patentanspruchs 9.

Durch die GB-2 241 766 ist eine Zahnkupplung bekannt geworden, die die Abtriebswelle des Getriebes mit dem Kettenantriebsrad verbindet. Solche Kupplungen ermöglichen das Abkoppeln des Endantriebs vom Hauptgetriebe, um das Fahrzeug z. B. über längere Strecken schleppen zu können, ohne dadurch Schäden am Getriebe zu verursachen oder um das Getriebe aus dem Fahrzeug auszubauen.

Die offenbarte Kupplung besteht aus einem an der Abtriebswelle des Getriebes angeordneten Zahnrad auf das eine innenverzahnte Kupplungshülse gesteckt ist, die mit ihrem anderen innenverzahnten Ende mit einem weiteren, auf der Eingangswelle des Endantriebs angeordneten, Zahnrad in Eingriff steht. Diese antriebsmäßige Verbindung kann durch axiale Verschiebung der Kupplungshülse in Richtung zum Hauptgetriebe gelöst werden.

Die Kupplungshülse weist einen radial nach innen reichenden Flansch auf, der zwischen den verzahnten Enden der Hülse angeordnet ist. Dieser Flansch ist auf einer Nabe axial verschieblich geführt und in der ein- bzw. ausgekuppelten Position fixierbar. Dazu sind an der, winkelbeweglich an der Abtriebswelle befestigten, Nabe radiale Einstiche angebracht, in welche von der Flanschseite durch Federkraft Kugeln eingedrückt werden. Die Kugeln sind jeweils in radialen Bohrungen des Flanschs eingebracht, in welchen Federn und zusätzliche Stifte zur Sicherung der Kugeln angeordnet sind. Die Stifte werden durch einen, die Kupplungshülse umschließenden Kragen abgestützt.

Zum axialen Verschieben der Kupplungshülse wird auf den Kragen ein radial wegstehender Hebel aufgeschraubt mit dem der Kragen in Umfangsrichtung um einen bestimmten Winkel verdreht wird, wodurch den Bohrungen Aussparungen gegenüberliegen, die den Stiften Verschiebeweg in radialer Richtung freigeben. Durch diese Entsicherung können die Kugeln, gegen die Federkraft aus dem jeweiligen Einstich an der Nabe herausgleiten und die Kupplungshülse kann mit dem Hebel in axialer Richtung in die ein- oder ausgekuppelte Position verschoben werden. In der jeweiligen End-Position muß der Kragen in die Sicherungsstellung zurückgedreht werden, wo er mittels Federkraft einrastet. Abschließend muß der Hebel entfernt werden.

Durch das Verschieben mit dem radial nach außen wegstehenden Hebel wird die Kraft ungünstig in die Kupplungshülse eingeleitet, so daß eine große Kraft erfoderlich ist, die durch einsetzendes Verkanten der Hülse noch gesteigert werden muß. Durch Anordnung des Hebels zwischen dem Hauptgetriebe und der Fahrzeugwand muß an dieser Stelle ein Freiraum vorgesehen werden, der einen Zugang zur Kupplungshülse freiläßt.

Es ist die Aufgabe der Erfindung eine Zahnkupplung zu schaffen, die ein einfacheres vollständiges Ein- bzw. Auskuppeln zuverlässig ermöglicht.

Diese Aufgabe wird erfindungsgemäß durch die kennzeichnenden Merkmale des Patentanspruchs 1 bzw. des Patentanspruchs 9 gelöst.

Durch die erfindungsgemäße zentrale Einleitung der Verschiebekraft wird ein Verkanten der Kupplungshülse vermieden und es sind kleine Kräfte zum Ein- oder Auskuppeln notwendig. Durch die vorteilhafte Ausgestaltung der Zahnkupplung wird auch ohne visuelle Kontrolle ein vollständiger Ein- bzw. Auskuppelvorgang ermöglicht.

Durch die günstige zentrale Betätigung der Zahnkupplung ist kein Freiraum zwischen dem Hauptgetriebe und der Fahrzeugwanne erforderlich, wodurch ein Fahrzeug schmaler gebaut werden kann oder größere Getriebebreiten möglich sind.

Durch die nachstehend beschriebenen Zeichnungen wird ein bevorzugtes Ausführungsbeispiel näher erläutert. Dabei zeigen die
- Fig. 1: einen Längsschnitt einer erfindungsgemäßen Anordnung, wobei oberhalb der Mittellinie die aus- und unterhalb die eingekuppelte Position der Kupplungshülse dargestellt ist, die
- Fig. 2a: zeigt eine Ansicht C-C aus Fig. 1 zu Beginn eines Kuppelvorgangs, die
- Fig. 2b: zeigt die gleiche Ansicht während eines Kuppelvorgangs und die
- Fig. 3a, b, c: zeigen eine Gesamtansicht eines erfindungsgemäßen Werkzeugs sowie gekennzeichnete Schnitte davon.

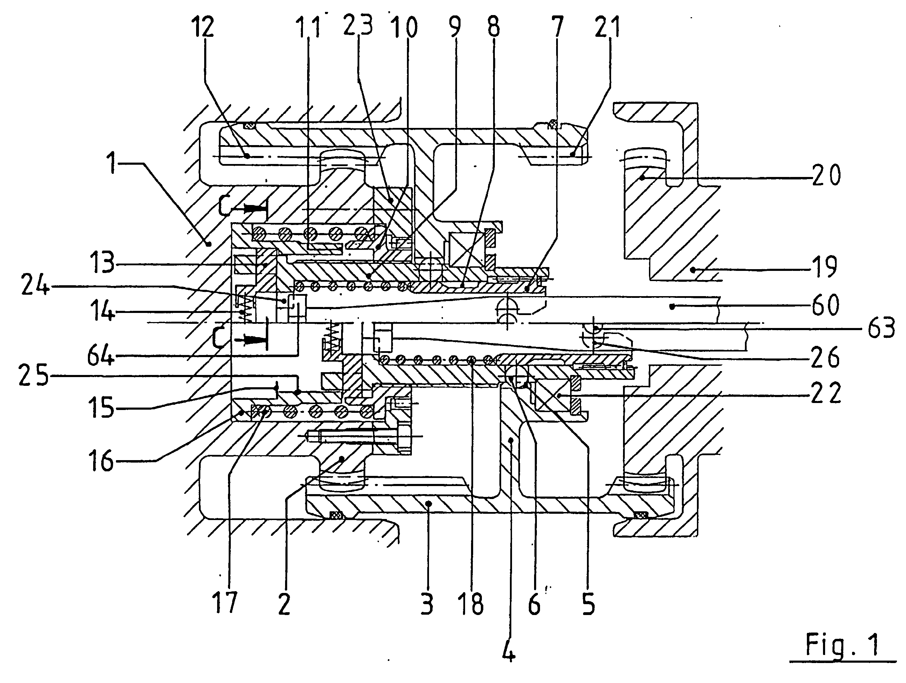

Die Fig. 1 zeigt ein bevorzugtes Ausführungsbeispiel in einem Längsschnitt. Eine Ausgangswelle (1) des nicht dargestellten Hauptgetriebes trägt ein vorzugsweise bogenverzahntes Zahnrad (2) über das eine Kupplungshülse (3) geschoben ist. Die Kupplungshülse (3) ist an ihrem getriebeseitigen Ende über einen breiteren Bereich verzahnt (12) als an ihrem zum Endabtrieb hinzeigenden Ende, so daß das Zahnrad (2) auch in ausgekuppeltem Zustand immer mit der Kupplungshülse (3) in Eingriff steht.

In der unteren Bildhälfte ist der eingekuppelte Zustand dargestellt. Die Verzahnung (21) der Kupplungshülse (3) steht in Eingriff mit dem Zahnrad (20), das mit der Eingangswelle (19) des Endantriebs verbunden ist. Durch nicht näher bezifferte Dichtungselemente am Außenumfang der Kupplungshülse (3) ist das Innere der Kupplungsmechanik gegen das Eindringen von Schmutz oder Flüssigkeit geschützt.

Zwischen den beiden Verzahnungen (12, 21) weist die Kupplungshülse (3) einen nach radial innen weisenden Flansch (4) auf, der die Kupplungshülse (3) mittels eines Lagers (22) drehbar auf einer Spindel (9) lagert. Das Lager (22) ist vorzugsweise ein Wälzlager, das Axialkräfte übertragen kann. Die relative Verdrehbarkeit der Spindel (9) gegenüber der Kupplungshülse (3) ist durch Kugeln (6), die in eine Verzahnung (5) des Flanschs (4) eingreifen, sperrbar. Dadurch wird ein unbeabsichtigtes Verschieben der Kupplungshülse (3) verhindert. Die Kugeln (6) sind in Bohrungen an der hülsenförmigen Spindel (9) eingelegt und stehen am Außenumfang der Spindel (9) über, wo sie in die Verzahnung (5) eingreifen. Am Innenumfang der Spindel (9) liegen die Kugeln (6) an einer, in die Spindel (9) eingeschobenen, Sicherungshülse (7) an.

Die Sicherungshülse (7) ist drehfest, beispielsweise durch eine Verzahnung, aber axial verschieblich mit der Spindel (9) verbunden und wird durch eine Feder (18) gegen einen Anschlag am Ende der Spindel (9) gedrückt. Durch Einschieben eines Werkzeugs (60) wird die Sicherungshülse (7) mittels eines Stifts (63), der in eine Aufnahme (26) der Sicherungshülse (7) eingreift, gegen die Kraft der Feder (18) in die Spindel (9) eingeschoben. Dadurch können die Kugeln (6) in eine, an der Sicherungshülse (7) umlaufenden, Vertiefung (8) gleiten und geben die Verzahnung (5) am Flansch (4) frei. Nach Entnahme des Werkzeugs (60) wird die Sicherungshülse (7) durch die Feder (18) automatisch in ihre Sperrstellung zurückgeschoben.

An ihrem, der Ausgangswelle (1) des Hauptgetriebes zugewendeten, Ende trägt die Spindel (9) ein Sperrteil (13), das in einer radialen Richtung verschieblich ist und von einer Feder (14) radial nach außen gedrückt wird. In der vollständig ausgekuppelten Position der Spindel (9) bzw. Kupplungshülse (3) liegt das Sperrteil (13) an einem Absatz (15) an und sichert die Spindel (9) zusätzlich gegen axiale Verschiebung (oberhalb der Mittellinie dargestellt).

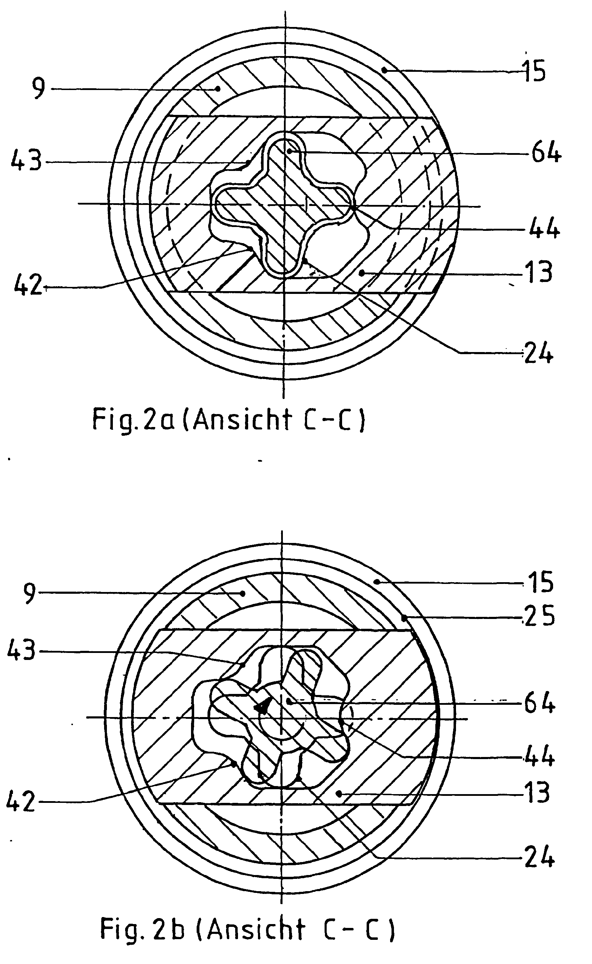

In der unteren Bildhälfte liegt das Sperrteil (13) an einem Absatz (11) an und sichert die Spindel (9) in der vollständig eingekuppelten Position. Die genaue Funktion des Sperrteils (13) wird nachfolgend anhand der Fig. 2 näher erläutert.

Die Spindel (9) wirkt mit einer winkelbeweglichen Spindelmutter (10) zusammen, die über eine Bogenverzahnung und einen innenverzahnten, an die Ausgangswelle (1) angeflanschten, Deckel (23) drehfest mit der Ausgangswelle (1) verbunden ist. Die Spindelmutter (10) wird mit einer Feder (17) gegen einen Anschlag am Deckel (23) gedrückt. Die Feder (17) stützt sich über eine Hülse (16) ab, die in eine Ausdrehung an der Ausgangswelle (1) eingelegt ist.

In Fig. 2 ist das Sperrteil (13) in einer vergrößerten Darstellung entsprechend der Ansicht C-C (Fig. 1) geschnitten gezeigt.

Die Fig. 2a stellt die Lage des Sperrteils (13) in ausgekuppelter Position entsprechend der oberen Bildhälfte der Fig. 1 dar. Das Sperrteil (13) wird in seiner Führung an der Spindel (9) durch die nicht dargestellte Feder (14) nach rechts bzw. radial nach außen gedrückt und liegt am Absatz (15) an.

Das Werkzeug (60) hat die Sicherungshülse (7) gegen die Kraft der Feder (18) in die Spindel (9) geschoben (siehe Fig. 1) und das Kreuz (64) ist durch die Öffnung (24) an der Spindel (9) in das Sperrteil (13) eingetreten. Am Sperrteil (13) hinter der Öffnung (24) ist ein Freiraum vorhanden, der das Verdrehen des Kreuzes (64) gegenüber der Öffnung (24) ermöglicht.

Aus Fig. 2b in Verbindung mit Fig. 1 ist ersichtlich, wie durch Drehung des Werkzeugs (60), in Richtung des eingezeichneten Pfeils, ein Schenkel des Kreuzes (64) das Sperrteil (13) über einen Nocken (42) nach links bzw. radial nach innen verschiebt, so daß es nicht mehr durch den Absatz (15) gesperrt wird. Das Kreuz (64) des Werkzeugs (60) deckt sich nicht mehr mit der Öffnung (24) an der Spindel (9) und kann in dieser Lage nicht herausgezogen werden.

Bei weiterer Drehung des Werkzeugs (60) in Pfeilrichtung wird die Spindel (9) über die Sicherungshülse (7), die Mitnehmer für den Stift (63) des Werkzeugs (60) aufweist, mitgedreht. Dadurch verschiebt sich die Spindel (9) in axialer Richtung, wobei sich das, an der Spindel (9) geführte, Sperrteil (13) über den Absatz (15) bewegt. Ein Zurückdrehen des Werkzeugs (60) in dieser axialen Position wird durch einen Sperrnocken (44) verhindert, der das Sperrteil (13) über einen Schenkel des Kreuzes (64) radial nach außen gegen die Wandung der Bohrung (25) klemmt. Dies ist in allen axialen Positionen zwischen den Absätzen (15, 11) der Fall, so daß das Kreuz (64) gegenüber der Öffnung (24) verdreht bleibt und das Werkzeug (60) nicht entnommen werden kann.

Nach Ausführung, der für das Einkuppeln erforderlichen Anzahl von Umdrehungen der Spindel (9), hat das Sperrteil (13) den Absatz (11) in axialer Richtung überlaufen und das Werkzeug (60) kann zurückgedreht werden, so daß sich das Sperrteil (13) an den Absatz (11) anlegt, das Kreuz (64) zur Deckung mit der Öffnung (24) kommt und entnommen werden kann.

In allen Stellungen in denen das Kreuz (64) des Werkzeugs (60) gegenüber der Öffnung (24) an der Spindel (9) verdreht ist, wird die Kraft der Feder (18) zwischen dem Kreuz (64), das sich an der Spindel (9) abstützt, und dem Stift (63) abgefangen, der sich an der Aufnahme (26) der Sicherungshülse (7) abstützt, so daß das Werkzeug (60) nach außen kraftfrei ist.

Mit der Entnahme des Werkzeugs (60) wird die Sicherungshülse (7) durch die Feder (18) in ihre Ausgangslage zurückgeschoben und die Kugeln (6) sperren in der Verzahnung (5) weitere unbeabsichtigte Drehungen der Spindel (9).

Zum Auskuppeln kann das Werkzeug (60) nun erneut eingelegt werden, wobei die Vertiefung (8) der Sicherungshülse (7) die Kugeln (6) aus der Verzahnung (5) aufnimmt und das Sperrteil (13) durch Drehung entgegen der Pfeilrichtung nun mit dem Nocken (43) radial nach innen bewegt wird. Durch Weiterdrehen bewegt sich das Sperrteil (13) mit der Spindel (9) in axialer Richtung über den Absatz (11) weg und das Werkzeug (60) kann analog zum Einkuppeln erst nach Überlaufen des zweiten Absatzes (15) zurückgedreht und entnommen werden.

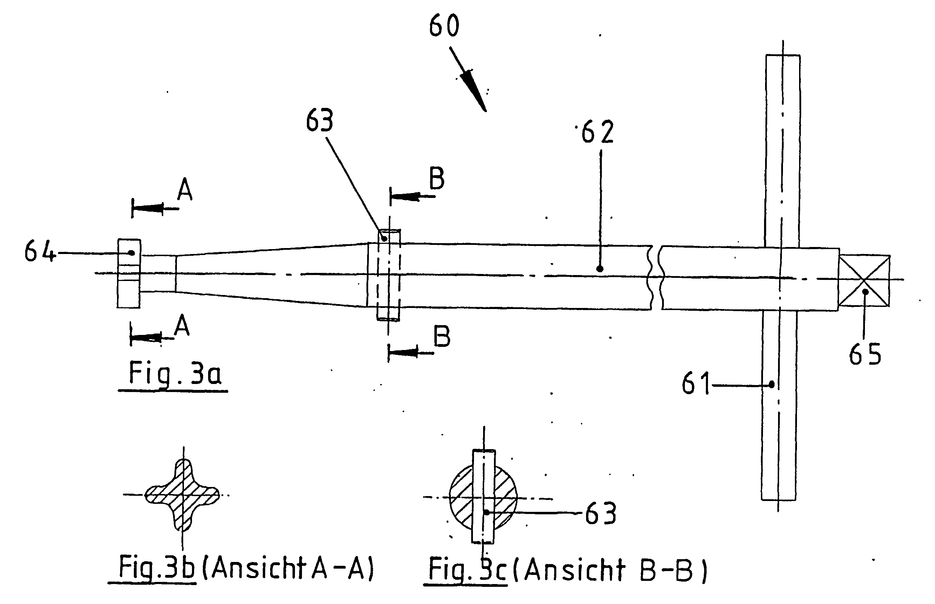

Die Fig. 3 zeigt ein Werkzeug (60) zum Ausführen eines Ein- bzw. Auskuppelvorganges an der Zahnkupplung.

Das Werkzeug (60) besteht gemäß Fig. 3a aus einem Schaft (62), der sich zum einen Ende hin konisch verjüngt. An diesem Ende trägt das Werkzeug (60) ein Kreuz (64), dessen Querschnitt aus Fig. 3b hervorgeht. Das Kreuz (64) umfaßt vier gleiche Schenkel, deren Übergänge gerundet sind.

Ein Stift (63) ist am Schaft (62) des Werkzeugs (60) derart vom Kreuz (64) beabstandet angebracht, daß beim Einlegen des Werkzeugs (60) in die Kupplung, das Kreuz (64) erst dann am Ende des Sperrteils (13) anstößt, wenn durch den Stift (63) die Sicherungshülse (7) soweit in die Spindel (9) eingeschoben wurde, daß.die Kugeln (6) die Verzahnung (5) freigeben. Der Stift (63) steht entsprechend der Fig. 3c auf beiden Seiten über den Schaft (62) hinaus. Der Stift (63) liegt beim Einschieben des Werkzeugs (60) in axialer Richtung an der Aufnahme (26) der Sicherungshülse (7) an und leitet die Drehbewegung des Werkzeugs (60) erst nach Entriegelung des Sperrteils (13) durch das Kreuz (64), über Mitnehmer an der Aufnahme (26) in die Sicherungshülse (7) ein.

Am, dem Kreuz (64) gegenüberliegenden, Ende des Schafts (62) ist ein Vierkant (65) angebracht, auf den beispielsweise ein Schlagschrauber aufgesetzt werden kann. Statt einem Vierkant (65) kann auch ein Sechskant oder eine andere Form zur formschlüssigen Verbindung mit einem Antrieb vorgesehen werden. Neben dem Vierkant (65) ist an diesem Ende des Schafts (62) ein Hebel (61) angeordnet mit dem das Werkzeug (60) manuell betätigt werden kann.

Statt dem beschriebenen Kreuz (64) kann auch eine beliebige andere Form, die auf das Sperrteil (13) abgestimmt ist, vorgesehen werden. Das gleiche trifft auch auf den Stift (63) zu, wobei dieses Teil des Werkzeugs (60) auf die Sicherungshülse (7) abgestimmt sein muß. Es ist beispielsweise auch denkbar quer zum Stift (63) einen weiteren Stift vorzusehen.

Am Sperrteil (13) kann zum Fixieren des Werkzeugs (60) auch ein Elektromagnet angeordnet sein, der durch elektrische Schaltmittel ansteuerbar ist.

Die elektrischen Schaltmittel können aus einem Drehgeber, der an der Spindel (9) angebracht ist und die Anzahl der ausgeführten Umdrehungen aufnimmt sowie einer elektronischen Vergleichsschaltung bestehen, die den Magneten bei Übereinstimmung der Signale des Drehgebers mit fest in der Vergleichsschaltung gespeicherten Signalen, abschaltet.

Ein weiteres Ausführungsbeispiel sieht Endschalter vor, die durch die Spindel (9) in voll ein- bzw. ausgekuppelter Position betätigt werden und den Stromkreis des Elektromagneten öffnen, wodurch das Werkzeug (60) an diesen axialen Positionen der Spindel (9) entnommen werden kann.

### Bezugszeichenliste

- 1: Ausgangswelle
- 2: Zahnrad
- 3: Kupplungshülse
- 4: Flansch
- 5: Verzahnung
- 6: Kugel
- 7: Sicherungshülse
- 8: Vertiefung
- 9: Spindel
- 10: Spindelmutter
- 11: Absatz
- 12: Verzahnung
- 13: Sperrteil
- 14: Feder
- 15: Absatz
- 16: Hülse
- 17: Feder
- 18: Feder
- 19: Eingangswelle
- 20: Zahnrad
- 21: Verzahnung
- 22: Lager
- 23: Deckel
- 24: Öffnung
- 25: Bohrung
- 26: Aufnahme

- 42: Nocken
- 43: Nocken
- 44: Sperrnocken

- 60: Werkzeug
- 61: Hebel
- 62: Schaft
- 63: Stift
- 64: Kreuz
- 65: Vierkant

## Patentansprüche

1. Zahnkupplung für kettengetriebene Fahrzeuge mit.innenverzahnter axial verschieblicher, an festgelegten Positionen fixierbarer, Kupplungshülse (3), die mit einem ersten außenverzahnten Zahnrad (2) in Eingriff steht sowie einen nach innen zeigenden Flansch (4) aufweist und mit einem zweiten außenverzahnten Zahnrad (20) in Eingriff bringbar ist, **dadurch gekennzeichnet, daß** der Flansch (4) mit einer koaxial innerhalb der Kupplungshülse (3) angeordneten Spindel (9) verbunden ist, die mit einer Spindelmutter (10) zusammenwirkt und an der Spindel (9) ein Sperrteil (13) für ein Werkzeug (60) angeordnet ist, wobei das Werkzeug (60) nur an festgelegten axialen Positionen der Spindel (9) aus dem Sperrteil (13) entnehmbar ist.

2. Zahnkupplung nach Anspruch 1, **dadurch gekennzeichnet, daß** am Sperrteil (13) Nocken (42, 43) vorgesehen sind durch die das Sperrteil (13) mittels Verdrehung des Werkzeugs (60) radial nach innen schiebbar ist und ein Sperrnocken (44) angeordnet ist durch den ein Zurückdrehen des Werkzeugs (60) innerhalb einer Bohrung (25) sperrbar ist. (Fig. 2a und b)

3. Zahnkupplung nach Anspruch 1, **dadurch gekennzeichnet, daß** am Sperrteil (13) zum Fixieren des Werkzeugs (60) ein Elektromagnet angeordnet ist, der durch elektrische Schaltmittel ansteuerbar ist, die von der Spindel (9) an frei festlegbaren axialen Positionen betätigbar sind.

4. Zahnkupplung nach Anspruch 3, **dadurch gekennzeichnet, daß** die elektrischen Schaltmittel aus einem Drehgeber, der an der Spindel (9) angebracht ist und einer elektronischen Vergleichsschaltung bestehen und der Magnet bei Übereinstimmung von Signalen des Drehgebers mit fest in der Vergleichsschaltung gespeicherten Signalen, abgeschaltet wird.

5. Zahnkupplung nach Anspruch 3, **dadurch gekennzeichnet, daß** die elektrischen Schaltmittel aus Schaltern zum Öffnen des, den Magneten aktivierenden, Stromkreises bestehen, und die Schalter an festgelegten axialen Positionen von der Spindel (9) betätigbar sind.

6. Zahnkupplung nach Anspruch 1, **dadurch gekennzeichnet, daß** die Spindel (9) mittels einer Sicherungshülse (7), die mit Kugeln (6) zusammenwirkt, drehfest mit dem Flansch (4) verbindbar ist.

7. Zahnkupplung nach Anspruch 6, **dadurch gekennzeichnet, daß** die drehfeste Verbindung der Spindel (9) und des Flanschs (4) mittels dem Werkzeug (60) lösbar ist.

8. Zahnkupplung nach Anspruch 1, **dadurch gekennzeichnet, daß** die Zahnräder (2, 20) bogenverzahnt sind.

9. Werkzeug, für die Zahnkupplung nach Anspruch 1, **dadurch gekennzeichnet, daß** das Werkzeug (60) an einem Ende eines Schafts (62) eine für den Eintritt in die Öffnung (24) des Sperrteils (13) der Zahnkupplung geeignete Form aufweisende Scheibe (Fig. 3b) trägt, und dazu axial beabstandet ein Stift (63) angeordnet ist, der in radialer Richtung über den Schaft (62) hinaussteht, und daß am anderen Ende des Schafts (62) ein Vierkant (65) angeformt ist sowie dem Bereich des anderen Endes ein Hebel (61) befestigt ist.

## Claims

1. A toothed coupling for tracked vehicles with a coupling sleeve (3) having internal teeth, which is axially displaceable and fixable at defined positions, and which engages a first externally toothed gear (2) and has an inwardly facing flange (4) and can be engaged with a second externally toothed gear (20), **characterised in that** the flange (4) is connected to a spindle (9) arranged coaxially within the coupling sleeve (3), the spindle co-operating with a spindle nut (10), and a blocking part (13) for a tool (60) is arranged on the spindle (9), the tool (60) being able to be removed from the blocking part (13) only at defined axial positions of the spindle (9).

2. A toothed coupling according to claim 1, **characterised in that** cams (42, 43) are provided on the blocking part (13) by means of which the blocking part (13) can be pushed radially inwardly by rotating the tool (60) and a blocking cam (44) is arranged by means of which the tool (60) can be blocked from rotating back within a bore (25) (Figs. 2a and b).

3. A toothed coupling according to claim 1, **characterised in that** an electromagnet is arranged on the blocking part (13) for fixing the tool (60), the electromagnet being operable by electrical switching means which can be actuated by the spindle (9) at freely definable axial positions.

4. A toothed coupling according to claim 3, **characterised in that** the electrical switching means comprise a rotary transducer mounted on the spindle (9) and an electronic comparator circuit, the magnet being switched off when signals from the rotary transducer coincide with signals stored permanently in the comparator circuit.

5. A toothed coupling according to claim 3, **characterised in that** the electrical switching means consist of switches for opening the circuit activating the magnet, and the switches can be actuated at defined axial positions of the spindle (9).

6. A toothed coupling according to claim 1, **characterised in that** the spindle (9) can be connected to the flange (4) in a manner fixed against rotation by means of a retaining sleeve (7) which co-operates with balls (6).

7. A toothed coupling according to claim 6, **characterised in that** the rotationally fixed connection of the spindle (9) and the flange (4) can be released by means of the tool (60).

8. A toothed coupling according to claim 1, **characterised in that** the toothed gears (2, 20) have helical teeth.

9. A tool for the toothed coupling according to claim 1, **characterised in that** the tool (60) carries on one end of a shank (62) a disc (Fig. 3b) having a suitable form for insertion into the aperture (24) of the blocking part (13) of the toothed coupling, and a pin (63) is arranged at an axial distance therefrom which projects radially beyond the shank (62), and **in that** at the other end of the shank (62) a squared portion (65) is formed and a lever (61) is fastened in the vicinity of the region of the other end.

## Revendications

1. Accouplement denté pour véhicules à chenilles, comprenant un manchon d'accouplement (3) à denture femelle pouvant être déplacé axialement et fixé dans des positions prédéterminées, qui coopère avec une première roue dentée à denture mâle (2) et présente une bride (4) orientée vers l'intérieur, et pouvant être mis en coopération avec une deuxième roue dentée à denture mâle (20),
**caractérisé en ce que**
la bride (4) est reliée à une broche (9) disposée coaxialement à l'intérieur du manchon d'accouplement (3) et qui coopère avec un écrou de broche (10), et la broche (9) comporte un élément d'arrêt (13) pour un outil (60), l'outil (60) ne pouvant être retiré de l'élément d'arrêt (13) que dans des positions axiales prédéterminées de la broche (9).

2. Accouplement denté selon la revendication 1,
**caractérisé en ce que**
l'élément d'arrêt (13) comporte des cames (42, 43) permettant de déplacer l'élément d'arrêt (13) radialement vers l'intérieur au moyen d'une rotation de l'outil (60), et une came d'arrêt (44) est disposée pour arrêter une rotation de retour de l'outil (60) à l'intérieur d'un alésage (25). (Figures 2a et b)

3. Accouplement denté selon la revendication 1,
**caractérisé en ce que**
pour la fixation de l'outil (60) l'élément d'arrêt (13) est muni d'un électro-aimant commandé par des moyens de commutation électriques qui sont actionnables par la broche (9) dans des positions axiales pouvant être déterminées librement.

4. Accouplement denté selon la revendication 3,
**caractérisé en ce que**
les moyens de commutation électriques comprennent un encodeur disposé sur la broche (9) et un circuit de comparaison électronique, et l'aimant est désactivé en cas de concordance de signaux de l'encodeur avec des signaux stockés de manière fixe dans le circuit de comparaison.

5. Accouplement denté selon la revendication 3,
**caractérisé en ce que**
les moyens de commutation électriques comprennent des commutateurs pour ouvrir le circuit électrique activant l'aimant, et les commutateurs sont actionnables par la broche (9) dans des positions axiales prédéterminées.

6. Accouplement denté selon la revendication 1,
**caractérisé en ce que**
la broche (9) peut être reliée solidaire en rotation à la bride (4) au moyen d'un manchon de blocage (7) qui coopère avec des billes (6).

7. Accouplement denté selon la revendication 6,
**caractérisé en ce que**
la liaison immobile en rotation de la broche (9) et de la bride (4) peut être desserrée au moyen de l'outil (60).

8. Accouplement denté selon la revendication 1,
**caractérisé en ce que**
les roues dentées (2, 20) présentent une denture hélicoïdale.

9. Outil pour l'accouplement denté selon la revendication 1,
**caractérisé en ce qu'**
à une extrémité d'un manche (62) l'outil (60) porte un disque présentant une forme appropriée pour être inséré dans l'ouverture (24) de l'élément d'arrêt (13) de l'accouplement denté (figure 3b), et une tige (63) qui dépasse le manche (62) dans la direction radiale est disposée à distance axiale, et à l'autre extrémité du manche (62) un quatre-pans (65) est rapporté par moulage, et un levier (61) est fixé dans la zone de l'autre extrémité.
